# EUROPÄISCHE PATENTSCHRIFT

(11) **EP 3 924 200 B1**
(45) Veröffentlichungstag und Bekanntmachung des Hinweises auf die Patenterteilung: **06.09.2023**
(21) Anmeldenummer: 19828199.0
(22) Anmeldetag: 22.11.2019
(51) Int. Cl.: B60K 6/387, B60K 6/48

(54) **KUPPLUNGSEINRICHTUNG MIT EINER EIN SPANNELEMENT AUFWEISENDEN BEFESTIGUNGSEINHEIT ZWISCHEN EINEM DREHSCHWINGUNGSDÄMPFER UND EINER TRENNKUPPLUNG**
CLUTCH DEVICE COMPRISING A FASTENING UNIT, WHICH HAS A CLAMPING ELEMENT, BETWEEN A TORSIONAL VIBRATION DAMPER AND A DISCONNECT CLUTCH
DISPOSITIF D'ACCOUPLEMENT COMPRENANT UN ÉLÉMENT DE CONTRAINTE PRÉSENTANT UNE UNITÉ DE FIXATION ENTRE UN AMORTISSEUR DE VIBRATIONS DE TORSION ET UN ACCOUPLEMENT DE SÉPARATION

(30) Priorität: 13.02.2019 DE 102019103547; 16.04.2019 DE 102019109981
(43) Veröffentlichungstag der Anmeldung: 22.12.2021
(73) Patentinhaber: Schaeffler Technologies AG & Co. KG, 91074 Herzogenaurach (DE)
(72) Erfinder: BULUT, Faruk, 77933 Lahr (DE); FINKENZELLER, Marc, 77723 Gengenbach (DE); VOGEL, Florian, 77815 Bühl (DE)
(86) Internationale Anmeldenummer: PCT/DE2019/101003
(87) Internationale Veröffentlichungsnummer: WO 2020/164650

(56) Entgegenhaltungen:
- DE-A1- 10 155 458
- DE-A1-102009 059 944
- DE-A1-102014 212 790
- DE-A1-102017 206 227

## Beschreibung

Die Erfindung betrifft eine Kupplungseinrichtung gemäß dem Oberbegriff des Anspruchs 1 mit einem Drehschwingungsdämpfer und einer Trennkupplung.

Aus dem Stand der Technik ist es hinlänglich bekannt, Drehschwingungsdämpfer ausgangsseitig mit einem Kupplungsbestandteil einer Trennkupplung drehfest anzubinden. Häufig wird ein Schwungrad des Drehschwingungsdämpfers mit der Trennkupplung verschraubt. Als Nachteil bekannter Verbindungstechniken, wie dem Verschrauben, ist jedoch zu nennen, dass durch diese eine Montage der Kupplungseinrichtung bzw. des Antriebsstranges relativ umständlich wird. Auch nehmen diese Verbindungsarten häufig relativ viel Bauraum in Anspruch. Dies führt wiederum dazu, dass die Bestandteile der Kupplungseinrichtung nicht optimal miteinander verschachtelt werden können, sodass der gesamte Bauraum der Kupplungseinrichtung relativ groß ist.

Aus der DE 10 2009 059 944 A1 ist eine Kupplungseinrichtung bekannt, die auf den Oberbegriff des Anspruchs 1 lesbar ist.

Es ist die Aufgabe der vorliegenden Erfindung, die aus dem Stand der Technik bekannten Nachteile zu beheben und insbesondere eine einfacher montierbare Kupplungseinrichtung zur Verfügung zu stellen, die zugleich hinsichtlich ihres Bauraums weiter optimiert ist.

Dies wird erfindungsgemäß durch den Gegenstand des Anspruchs 1 gelöst. Demnach ist eine Kupplungseinrichtung für einen Antriebsstrang eines Kraftfahrzeuges, wie eines Pkws, Lkws, Busses oder sonstigen Nutzfahrzeuges vorgesehen. Die Kupplungseinrichtung weist einen Drehschwingungsdämpfer, eine Trennkupplung sowie eine die Trennkupplung mit dem Drehschwingungsdämpfer wieder lösbar verbindende Befestigungseinheit auf. Die Befestigungseinheit weist weiterhin einen, an einem Kupplungsbestandteil der Trennkupplung festgelegten, ersten Verzahnungsbereich, einen an der Ausgangsseite des Drehschwingungsdämpfers festgelegten, mit dem ersten Verzahnungsbereich (indirekt oder vorzugsweise direkt) in formschlüssigen Drehverbund befindlichen zweiten Verzahnungsbereich sowie ein die Verzahnungsbereiche mit einer Vorspannkraft in einer Umfangsrichtung relativ zueinander vorspannendes Spannelement auf, und wobei das Spannelement derart ausgebildet ist, dass es die Ausgangsseite des Drehschwingungsdämpfers mit einer axialen Anpresskraft relativ zu dem Kupplungsbestandteil (der Trennkupplung) vorspannt.

Durch die vorgespannte formschlüssige Drehverbindung zwischen der Ausgangsseite des Drehschwingungsdämpfers und dem Kupplungsbestandteil der Trennkupplung wird eine kompakt umsetzbare Befestigungseinheit realisiert. Insbesondere benötigt eine derartige Befestigungseinheit relativ wenig axialen Bauraum. Zudem ist eine Montage der Kupplungseinrichtung deutlich vereinfacht. Hierzu brauchen lediglich die beiden Verzahnungsbereiche ineinander eingeschoben werden und das Spannelement losgelassen werden, sodass die Verzahnungsbereiche in Umfangsrichtung relativ zueinander verspannt sowie in axialer Richtung relativ zueinander über eine bestimmte axiale Vorspannkraft fixiert werden.

Weitere vorteilhafte Ausführungen sind mit den Unteransprüchen beansprucht und nachfolgend näher erläutert.

Ist der Drehschwingungsdämpfer als ein Zweimassenschwungrad ausgebildet, wobei die Ausgangsseite unmittelbar durch eine relativ zu einem Primärrad des Drehschwingungsdämpfers drehschwingungsgedämpft verdrehbare Mitnehmerscheibe umgesetzt ist, wird eine besonders platzsparende Anbindung des Drehschwingungsdämpfers an die Befestigungseinheit ermöglicht. Durch die Ausbildung des Drehschwingungsdämpfers als Zweimassenschwungrad ergibt sich zudem eine effektive Drehschwingungsdämpfung eines Antriebsstranges.

Die Trennkupplung weist erfindungsgemäß einen den ersten Verzahnungsbereich aufnehmenden ersten Kupplungsbestandteil sowie einen mit dem ersten Kupplungsbestandteil koppelbaren zweiten Kupplungsbestandteil auf, so dass die Kupplung möglichst direkt mit der Befestigungseinheit verbunden ist.

In diesem Zusammenhang ist es weiterhin vorteilhaft, wenn der zweite Kupplungsbestandteil der Trennkupplung drehfest mit einer Zwischenwelle verbunden ist und der erste Kupplungsbestandteil der Trennkupplung auf dieser Zwischenwelle verdrehbar gelagert ist. Zudem ist der erste Kupplungsbestandteil vorteilhaft in axialer Richtung (der Zwischenwelle) auf dieser Zwischenwelle abgestützt. Dadurch ergibt sich eine robuste Abstützung der Trennkupplung auf der Zwischenwelle.

Des Weiteren ist es von Vorteil, wenn die beiden Kupplungsbestandteile der Trennkupplung derart auf der Zwischenwelle aufgenommen sind, dass eine durch eine Betätigungseinheit, wie einen Kupplungsnehmerzylinder, zum Schließen oder Öffnen der Trennkupplung aufgebrachte Betätigungskraft über die Zwischenwelle abgestützt ist. Die Zwischenwelle bringt daher eine Gegenkraft auf, um die Befestigungseinheit von den im Betrieb auftretenden Betätigungskräften möglichst zu entlastet. Dadurch wird die Einsetzbarkeit der Kupplungseinrichtung erweitert.

Von Vorteil ist es zudem, wenn die Trennkupplung als eine Ein- oder Mehrscheibenkupplung (Reibungskupplung) ausgebildet ist. Dadurch lassen sich in Abhängigkeit des zu übertragenden Drehmomentes bauraumsparende Ausbildungen der Trennkupplung umsetzen. Besonders bevorzugt ist die Trennkupplung als eine Mehrscheibenkupplung in Form einer Reiblamellenkupplung realisiert.

Ist eine Fliehkraftpendeleinrichtung an einem (ersten) Kupplungsbestandteil der Trennkupplung befestigt, wird die Drehschwingungsdämpfung des Antriebsstranges im Betrieb deutlich gesteigert. Die Fliehkraftpendeleinrichtung weist auf typische Weise einen Träger auf, der direkt an dem (ersten) Kupplungsbestandteil der Trennkupplung befestigt ist. An dem Träger sind wiederum im Fliehkraftfeld pendelbare Pendelmassen aufgenommen.

Die Fliehkraftpendeleinrichtung ist zweckmäßigerweise an einer radialen Außenseite eines topfförmigen Trägers des ersten Kupplungsbestandteils angebracht.

In diesem Zusammenhang ist es auch von Vorteil, wenn die Fliehkraftpendeleinrichtung zumindest teilweise in einer axialen Richtung auf gleicher Höhe mit mehreren miteinander verbindbaren Reibelementen der Trennkupplung angeordnet ist. Somit ist die Fliehkraftpendeleinrichtung bevorzugt einerseits in radialer Richtung außerhalb der Reibelemente, andererseits in axialer Richtung auf gleicher Höhe mit den Reibelementen angeordnet, wodurch eine kompakte axiale Schachtelung der Kupplungseinrichtung realisiert ist.

Diese kompakte Anordnung wird weiter verbessert, wenn die Fliehkraftpendeleinrichtung axial neben mehreren Dämpferfedern des Drehschwingungsdämpfers angeordnet ist und/oder die Befestigungseinheit seitens ihres Spannelementes radial innerhalb der Fliehkraftpendeleinrichtung und der Dämpferfedern angeordnet ist. Die Befestigungseinheit ist seitens ihres Spannelementes wiederum axial versetzt zu den Reibelementen der Trennkupplung angeordnet.

In anderen Worten ausgedrückt, ist erfindungsgemäß eine Verspanneinrichtung (Befestigungseinheit) zwischen einem Zweimassenschwungrad (Drehschwingungsdämpfer) und einer K0-Kupplung (Trennkupplung) realisiert. Vorgeschlagen wird ein hybrider Antriebsstrang für ein Kraftfahrzeug, bei dem ein Verbrennungsmotor über die so genannte K0-Kupplung an den Antriebsstrang zukoppelbar und vom Antriebsstrang abkoppelbar ist. Zwischen dem Verbrennungsmotor und der K0-Kupplung ist ein Zweimassenschwungrad angeordnet. Zwischen dem Zweimassenschwungrad und der K0-Kupplung ist die Verspanneinrichtung angeordnet, die einen werkzeuglosen Zusammenbau des mit der Kurbelwelle des Verbrennungsmotors verschraubten Zweimassenschwungrads und de K0-Kupplung erlaubt. Vorzugsweise ist im Außenumfang der K0-Kupplung ein Fliehkraftpendel angeordnet und drehfest mit dem Außenkorb / der Gegendruckplatte / dem Kupplungsgehäuse der K0-Kupplung verbunden.

Die Erfindung wird nun nachfolgend anhand von Figuren näher erläutert.

Es zeigen:
- Fig. 1: eine Längsschnittdarstellung einer erfindungsgemäßen Kupplungseinrichtung nach einem bevorzugten Ausführungsbeispiel, wobei eine einen Drehschwingungsdämpfer mit einer Trennkupplung koppelnde Befestigungseinheit vereinfacht dargestellt ist,
- Fig. 2: eine perspektivische Detaildarstellung der in Fig. 1 eingesetzten, bereits an einer Mitnehmerscheibe des Drehschwingungsdämpfers eingesetzten Befestigungseinheit,
- Fig. 3: eine perspektivische Schnittdarstellung der Befestigungseinheit nach Fig. 2 im Bereich einer das Spannelement relativ zu der Mitnehmerscheibe vorspannenden Vorspannfeder,
- Fig. 4: eine perspektivische Schnittdarstellung der Befestigungseinheit nach Fig. 2 in einem Bereich eines zwei Bereiche des Spannelementes verbindenden Niets,
- Fig. 5: eine perspektivische Detailansicht der Befestigungseinheit nach Fig. 2 in einem Bereich einer Arretierungszunge zur Fixierung des Spannelementes relativ zu der Mitnehmerscheibe, sowie
- Fig. 6: eine perspektivische Schnittdarstellung der Befestigungseinheit nach Fig. 2 in einem Bereich der Arretierungszunge nach Fig. 5.

Die Figuren sind lediglich schematischer Natur und dienen ausschließlich dem Verständnis der Erfindung. Die gleichen Elemente sind mit denselben Bezugszeichen versehen.

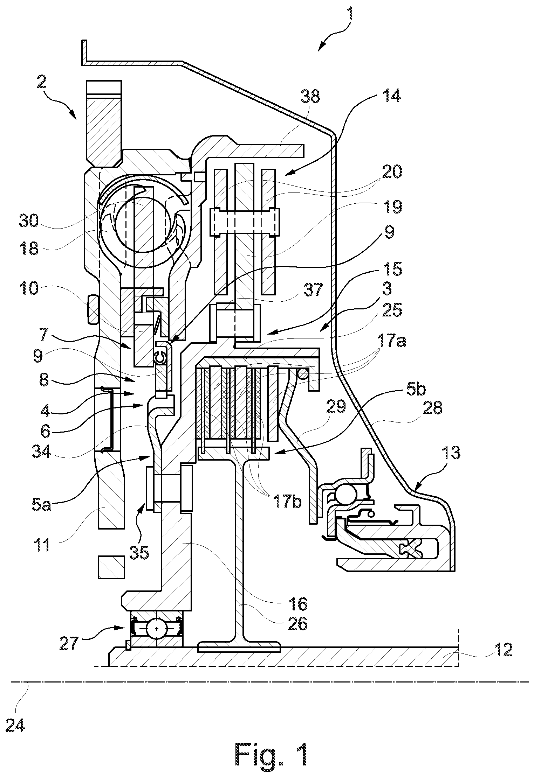

Ein Aufbau der erfindungsgemäßen Kupplungseinrichtung 1 nach einem bevorzugten Ausführungsbeispiel ist in Verbindung mit Fig. 1 gut zu erkennen. Die Kupplungseinrichtung 1 dient auf typische Weise zum Koppeln einer Ausgangswelle eines hier der Übersichtlichkeit halber nicht weiter dargestellten Verbrennungsmotors mit weiteren Bestandteilen eines Antriebsstranges eines Kraftfahrzeuges, bspw. eines Getriebes und/oder eines Rotors einer elektrischen Maschine.

Eingangsseitig, d. h. seitens des Verbrennungsmotors, ist ein Drehschwingungsdämpfer 2 in der Kupplungseinrichtung 1 angeordnet. Der Drehschwingungsdämpfer 2 ist als ein Zweimassenschwungrad realisiert. Der Drehschwingungsdämpfer 2 weist daher ein eingangsseitiges Primärrad 11 auf. Das Primärrad 11 ist im Betrieb vorzugsweise an der Ausgangswelle des Verbrennungsmotors befestigt. Eine ein Sekundärrad bildende Mitnehmerscheibe 10 des Drehschwingungsdämpfers 2 ist gemäß der Ausbildung eines Zweimassenschwungrades über mehrere in Umfangsrichtung verteilte Dämpferfedern 18 relativ zu dem Primärrad 11 federngedämpft abgestützt.

Über die eine Ausgangsseite 7 des Drehschwingungsdämpfers 2 ausbildende Mitnehmerscheibe 10 ist der Drehschwingungsdämpfer 2 mittels einer erfindungsgemäß ausgebildeten Befestigungseinheit 4 mit einer Trennkupplung 3 verbunden. Die Trennkupplung 3 ist als eine Mehrscheibenkupplung in Form einer Reiblamellenkupplung realisiert. In weiteren Ausführungen ist die Trennkupplung 3 jedoch auch auf andere Weise, bspw. als Einscheibenkupplung, umgesetzt. Die Trennkupplung 3 weist einen (eingangsseitigen) ersten Kupplungsbestandteil 5a auf. Der erste Kupplungsbestandteil 5a weist wiederum einen Träger 16 auf, der hier als Außenlamellenträger / Außenkorb realisiert ist. Der Träger 16 ist auf einer zentralen Zwischenwelle 12, die um eine Drehachse 24 drehbar ist, gelagert. Der Träger 16 weist einen hülsenförmigen Aufnahmebereich 25 auf, an dessen radialer Innenseite mehrere erste Reibelemente 17a des ersten Kupplungsbestandteils 5a drehfest sowie in axialer Richtung (entlang der Drehachse 24) relativ zueinander verschiebbar aufgenommen sind. Der Träger 16 des ersten Kupplungsbestandteils 5a ist derart über ein Stützlager 27 (hier in Form eines Wälzlagers, nämlich eines Kugellagers) auf einer Außenseite der Zwischenwelle 12 abgestützt, dass der Träger 16 in axialer Richtung an der Zwischenwelle 12 abgestützt ist.

Ein mit dem ersten Kupplungsbestandteil 5a in einer geschlossenen Stellung der Trennkupplung 3 drehfest verbundener zweiter Kupplungsbestandteil 5b der Trennkupplung 3 weist mehrere zweite Reibelemente 17b auf, die sich in axialer Richtung mit dem ersten Reibelementen 17a abwechseln. Die zweiten Reibelemente 17b sind auf einem einen Innenlamellenträger bildenden Verbindungsflansch 26 des zweiten Kupplungsbestandteils 5b drehfest sowie in axialer Richtung relativ zueinander verschiebbar aufgenommen. Der Verbindungsflansch 26 ist unmittelbar drehfest an der Zwischenwelle 12 weiter aufgenommen.

Zur Betätigung der Trennkupplung 3 ist eine Betätigungseinheit 13 vorhanden. Die Betätigungseinheit 13 ist als eine hydraulische Betätigungseinheit 13 umgesetzt. Die Betätigungseinheit 13 weist einen Kupplungsnehmerzylinder auf. Die Betätigungseinheit 13 ist an einem in Fig. 1 der Übersichtlichkeit halber lediglich schematisch dargestellten Gehäuse 28 der Kupplungseinrichtung 1 angebracht. Die Betätigungseinheit 13 wirkt auf typische Weise verstellend auf ein Hebelelement 29 ein, welches Hebelelement 29 die axiale Position der Reibelemente 17a, 17b zueinander bestimmt und die Trennkupplung 3 zwischen ihrer geöffneten und geschlossenen Kupplung verbringt.

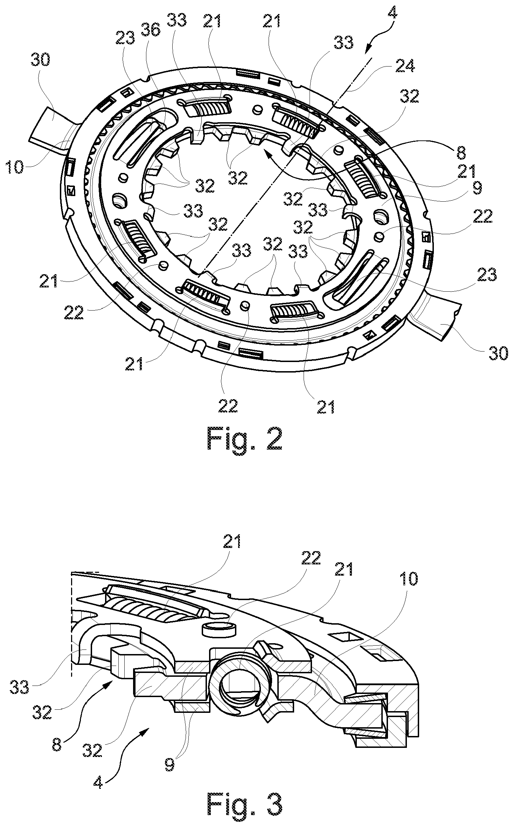

Wie in den Fign. 2 bis 6 detailliert zu erkennen, ist die Befestigungseinheit 4 erfindungsgemäß zum formschlüssigen Verbinden der Mitnehmerscheibe 10 mit dem ersten Kupplungsbestandteil 5a ausgebildet. Die Befestigungseinheit 4 ist in den Fign. 2 bis 6 zusammen mit der Mitnehmerscheibe 10 dargestellt. An zwei in radialer Richtung nach außen abstehenden Anschlägen 30 der Mitnehmerscheibe 10 sind auf typische Weise die entsprechenden Dämpferfedern 18 in Umfangsrichtung abgestützt.

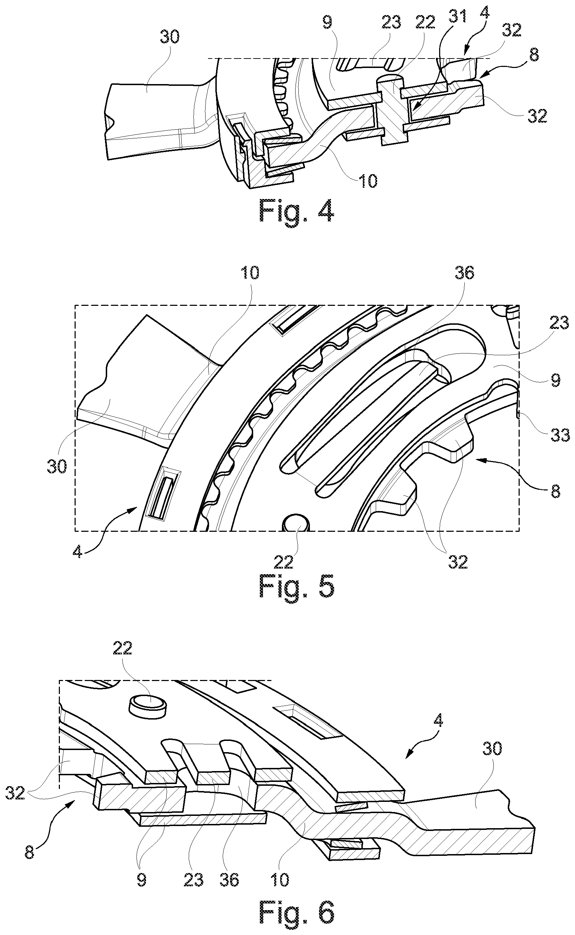

Wie aus Zusammenschau der Fign. 2 bis 6 hervorgeht, weist die Befestigungseinheit 4 ein Spannelement 9 auf, das in einer Drehrichtung relativ zu der Mitnehmerscheibe 10 über mehrere in Umfangsrichtung angeordnete Vorspannfedern 21 um die Drehachse 24 herum vorgespannt ist. Das Spannelement 9 weist, wie in Fig. 4 verdeutlicht, zwei Teile auf, die zu gegenüberliegenden axialen Seiten der Mitnehmerscheibe 10 hin angeordnet sind und über mehrere, die Mitnehmerscheibe 10 im Bereich von Durchgangslöchern 31 durchdringenden Nieten 22 verbunden sind. An einer radialen Innenseite der Mitnehmerscheibe 10 ist ein (zweiter) Verzahnungsbereich 8 ausgebildet, der sich in dem montierten Zustand der Kupplungseinrichtung 1 nach Fig. 1 in formschlüssigen Verbund mit einem ersten Verzahnungsbereich 6 des ersten Kupplungsbestandteils 5a befindet. Der erste Verzahnungsberiech 6 ist durch ein Verzahnungsblech 34 umgesetzt und an dem Träger 16 (über eine Vernietung) befestigt. Das Verzahnungsblech 34 weist hierzu einen scheibenförmigen Befestigungsbereich 35 auf, der axial an einer Stirnseite des Trägers 16 anliegt und mit dem Träger 16 vernietet ist. Von dem Befestigungsbereich 35 aus erstreckt sich das Verzahnungsblech 34 in radialer Richtung nach außen und geht zu seiner radialen Außenseite hin in den axial verlaufenden ersten Verzahnungsbereich 6 über. Der erste Verzahnungsbereich 6 befindet sich in dieser Ausführung in radialer Richtung in Bezug auf die Drehachse 24 auf gleicher Höhe mit den Reibelementen 17a, 17b der Trennkupplung 3.

Der zweite Verzahnungsbereich 8 weist mehrere in Umfangsrichtung verteilt angeordnete Zähne 32 auf (Fig. 2), welche Zähne 32 sich in Umfangsrichtung mit Verspannkrägen 33 / Verspannnasen an dem Spannelement 9 abwechseln. Der jeweilige Verspannkragen 33 ist in axialer Richtung auf gleicher Höhe mit den Zähnen 32 angeordnet und bildet somit einen in Umfangsrichtung beweglichen und vorgespannten Zahn des zweiten Verzahnungsbereiches 8 aus. Der erste Verzahnungsbereich 6 ist auf typische Weise mit einer in Umfangsrichtung verlaufenden gleichmäßigen Verzahnung realisiert, sodass im Gegensatz zu dem zweiten Verzahnungsbereich 8 keine Lücken umgesetzt sind, die durch die entsprechenden Verspannkragen 33 ersetzt sind.

Des Weiteren ist bspw. in den Fign. 5 und 6 zu erkennen, dass das Spannelement 9 zwei in Umfangsrichtung um im Wesentlichen 180° zueinander versetzt angeordnete Arretierungszungen 23 aufweist. Jede Arretierungszunge 23 erstreckt sich in Umfangsrichtung und ist in axialer Richtung verschwenkbar. In der Stellung nach den Fign. 5 und 6 befinden sich die Arretierungszungen 23 in einem vorgespannten Zustand, unter umfangsseitiger formschlüssiger Abstützung in einer Ausnehmung 36 der Mitnehmerscheibe 10. Die Arretierungszunge 23 ist in dieser so umsetzenden Montagestellung des Spannelementes 9 derart in der Ausnehmung 36 fixiert, dass eine Verdrehung des Spannelementes 9 relativ zu der Mitnehmerscheibe 10 blockiert ist. Die Vorspannfedern 21 sind derart angeordnet und ausgelegt, dass sie die Arretierungszunge 23 in einer Drehrichtung in die Ausnehmung 36 und somit in die Montagestellung hinein drücken.

Bei einer Montage der Kupplungseinrichtung 1 wird demnach die in den Fign. 2 bis 6 dargestellte Befestigungseinheit 4 mit ihrem zweiten Verzahnungsbereich 8 in axialer Richtung auf den ersten Verzahnungsbereich 6 aufgeschoben. Dabei sind die Verspannkragen 33 derart zu den Zähnen 32 angeordnet, dass sowohl die Verspannkragen 33 als auch die Zähne 32 des zweiten Verzahnungsbereiches 8 in axialer Richtung fluchtend mit Zahnlücken des ersten Verzahnungsbereiches 6 angeordnet sind und die Mitnehmerscheibe 10 auf das Trägerblech aufgeschoben werden kann. Im Anschluss daran werden die Arretierungszungen 23 gelöst, indem bspw. das Spannelement 9 gegen die Federkraft der Vorspannfedern 21 verdreht sind. Dabei lösen sich die Arretierungszungen 23 aus den Ausnehmungen 36 und das Spannelement 9 wird in Umfangsrichtung relativ zu der Mitnehmerscheibe 10 in der durch die Vorspannfedern 21 vorgegebene Drehrichtung verdreht.

Durch die Vorspannkraft der Vorspannfedern 21 kommt es zu einem umfangsseitigen Andrücken der Verspannkragen 33 an dem jeweiligen Zahn des ersten Verzahnungsbereiches 6. Dadurch ergibt sich ein in Umfangsrichtung spielfrei ausgebildeter formschlüssiger Verzahnungseingriff zwischen den beiden Verzahnungsbereichen 6 und 8. Zugleich, aufgrund der Ausbildung der Arretierungszungen 23, wird das Spannelement 9 in axialer Richtung mit einer gewissen axialen Vorspannkraft gegen die Mitnehmerscheibe 10 in einer axialen Richtung der Drehachse 24 verschoben. Dabei kommt es in axialer Richtung zu einem Anschlag des Spannelementes 9 an einem Bereich des ersten Verzahnungsbereiches 6. Dadurch wird auch eine axiale Anpresskraft erzeugt, die dafür sorgt, dass die Mitnehmerscheibe 10 in axialer Richtung zu dem ersten Kupplungsbestandteil 5a festgelegt ist.

Zurückkommend auf Fig. 1 sei zudem darauf hingewiesen, dass zusätzlich eine Fliehkraftpendeleinrichtung 14 vorgesehen ist. Die Fliehkraftpendeleinrichtung 14 ist in einer radialen Außenseite 15 des Trägers 16 umgesetzt. Der Träger 16, der einerseits den Außenlamellenträger bildet, andererseits eine Gegendruckplatte der Trennkupplung 3 sowie ein Kupplungsgehäuse ausbildet, weist an seiner radialen Umfangsseite Verankerungsbereiche 37 in Form von radial abstehenden Laschen auf, an denen ein Trägerelement 19 der Fliehkraftpendeleinrichtung 14 fixiert ist. Diese Fixierung ist durch eine Nietverbindung umgesetzt. An dem Trägerelement 19 sind mehrere Pendelmassen 20 im Betrieb der Kupplungseinrichtung 1 in einem Fliehkraftfeld pendelnd aufgenommen. Die Fliehkraftpendeleinrichtung 14 ist mit ihrem Trägerelement 19 und ihren Pendelmassen 20 in axialer Richtung auf gleicher Höhe mit den Reibelementen 17a, 17b angeordnet. Die Fliehkraftpendeleinrichtung 14 befindet sich mit ihren Pendelmassen 20 radial außerhalb der Reibelemente 17a, 17b. Zudem sind die Dämpferfedern 18 auf gleicher radialer Höhe mit der Fliehkraftpendeleinrichtung 14 / den Pendelmassen 20 angeordnet. Die Fliehkraftpendeleinrichtung 14 ist in axialer Richtung neben den Dämpferfedern 18 / dem Zweimassenschwungrad angeordnet. Wie zudem zu erkennen, ist an dem Primärrad 11 ein Deckelbereich 38 durch ein separates Deckelelement realisiert, welches Deckelelement die Fliehkraftpendeleinrichtung 14 zu ihrer radialen Außenseite hin überdeckt. Die Befestigungseinheit 4 ist wiederum relativ zu dem Dämpferelement 18 sowie zu der Fliehkraftpendeleinrichtung 14 in radialer Richtung nach innen versetzt. Die Befestigungseinheit 4 befindet sich in axialer Richtung neben den Reibelementen 17a, 17b.

In anderen Worten ausgedrückt, ist durch die erfindungsgemäße Verspannlösung ein bauraumoptimiertes Verbinden der Systeme 2 und 3 möglich. Zusätzlich ist mit der Verspannlösung eine größere Flexibilität bezüglich Austauschbarkeit der Systeme gegeben. Durch Montage der Trennkupplung 3 auf der Zwischenwelle 12 kann die Betätigungskraft intern abgestützt werden. Die Fliehkraftpendeleinrichtung 14 (FKP) kann außenliegend vorgesehen und mit der Trennkupplung 3 verbunden sein. Das Motormoment wird im Betrieb über die Bogenfeder (Dämpferfedern 18) durch die Mitnehmerplatte (Mitnehmerscheibe 10) und die sogenannte Verspannlösung (Befestigungseinheit 4) an die Kupplung 3 übertragen. Die Momentenübertragung in der Verspannlösung 4 wird über eine Formschluss-"Verzahnung" realisiert. Das Verspannblech (Verzahnungsblech 34) ist mit der Gegenplatte (Träger 16) der Kupplung 3 vernietet. Die Kupplung 3 kann als eine Lamellenkupplung oder eine Einscheibenkupplung ausgeführt werden. Optional kann das FKP 14 mit angebracht werden. Das FKP 14 ist in diesem Fall radial außerhalb der Kupplung 3 angeordnet. Die Betätigungskraft durch der Kupplung 3 soll durch eine Hebelübersetzung reduziert werden. Durch Montage der Trennkupplung 3 auf der Zwischenwelle 12 kann die Betätigungskraft intern abgestützt werden. Vorteilhafte Anwendungsgebiete sind Hybridsysteme, in denen Kupplungen 3 in Verbindung mit Dämpfern 2 und FKP 14 eingesetzt werden.

### Bezugszeichenliste

- 1: Kupplungseinrichtung
- 2: Drehschwingungsdämpfer
- 3: Trennkupplung
- 4: Befestigungseinheit
- 5a: erster Kupplungsbestandteil
- 5b: zweiter Kupplungsbestandteil
- 6: erster Verzahnungsbereich
- 7: Ausgangsseite
- 8: zweiter Verzahnungsbereich
- 9: Spannelement
- 10: Mitnehmerscheibe
- 11: Primärrad
- 12: Zwischenwelle
- 13: Betätigungseinheit
- 14: Fliehkraftpendeleinrichtung
- 15: Außenseite
- 16: Träger
- 17a: erstes Reibelement
- 17b: zweites Reibelement
- 18: Dämpferfeder
- 19: Trägerelement
- 20: Pendelmasse
- 21: Vorspannfeder
- 22: Niet
- 23: Arretierungszunge
- 24: Drehachse
- 25: Aufnahmebereich
- 26: Verbindungsflansch
- 27: Stützlager
- 28: Gehäuse
- 29: Hebelelement
- 30: Anschlag
- 31: Durchgangsloch
- 32: Zahn
- 33: Verspannkragen
- 34: Verzahnungsblech
- 35: Befestigungsbereich
- 36: Ausnehmung
- 37: Verankerungsbereich
- 38: Deckelbereich

## Patentansprüche

1. Kupplungseinrichtung (1) für einen Antriebsstrang eines Kraftfahrzeuges, mit einem Drehschwingungsdämpfer (2), einer Trennkupplung (3) sowie einer die Trennkupplung (3) mit dem Drehschwingungsdämpfer (2) wiederlösbar verbindenden Befestigungseinheit (4), wobei die Befestigungseinheit (4) einen, an einem Kupplungsbestandteil (5a) der Trennkupplung (3) festgelegten, ersten Verzahnungsbereich (6), einen an der Ausgangsseite (7) des Drehschwingungsdämpfers (2) festgelegten, mit dem ersten Verzahnungsbereich (6) im formschlüssigen Drehverbund befindlichen zweiten Verzahnungsbereich (8) sowie ein die Verzahnungsbereiche (6, 8) mit einer Vorspannkraft in einer Umfangsrichtung relativ zueinander vorspannendes Spannelement (9) aufweist, und wobei das Spannelement (9) derart ausgebildet ist, dass es die Ausgangsseite (7) des Drehschwingungsdämpfers (2) mit einer axialen Anpresskraft relativ zu dem Kupplungsbestandteil (5a) vorspannt, **dadurch gekennzeichnet, dass** die Trennkupplung (3) einen den ersten Verzahnungsbereich (6) aufnehmenden ersten Kupplungsbestandteil (5a) sowie einen mit dem ersten Kupplungsbestandteil (5a) koppelbaren zweiten Kupplungsbestandteil (5b) aufweist.

2. Kupplungseinrichtung (1) nach Anspruch 1, **dadurch gekennzeichnet, dass** der Drehschwingungsdämpfer (2) als ein Zweimassenschwungrad ausgebildet ist, wobei die Ausgangsseite (7) unmittelbar durch eine relativ zu einem Primärrad (11) des Drehschwingungsdämpfers (2) drehschwingungsgedämpft verdrehbare Mitnehmerscheibe (10) umgesetzt ist.

3. Kupplungseinrichtung (1) nach Anspruch 1 oder 2, **dadurch gekennzeichnet, dass** der zweite Kupplungsbestandteil (5b) drehfest mit einer Zwischenwelle (12) verbunden ist und der erste Kupplungsbestandteil (5a) auf dieser Zwischenwelle (12) verdrehbar gelagert ist.

4. Kupplungseinrichtung (1) nach einem der Ansprüche 1 bis 3, **dadurch gekennzeichnet, dass** die beiden Kupplungsbestandteile (5a, 5b) derart auf der Zwischenwelle (12) aufgenommen sind, dass eine durch eine Betätigungseinheit (13) zum Schließen oder Öffnen der Trennkupplung (3) aufgebrachte Betätigungskraft über die Zwischenwelle (12) abgestützt ist.

5. Kupplungseinrichtung (1) nach einem der Ansprüche 1 bis 4, **dadurch gekennzeichnet, dass** die Trennkupplung (3) als eine Ein- oder Mehrscheibenkupplung ausgebildet ist.

6. Kupplungseinrichtung (1) nach einem der Ansprüche 1 bis 5, **dadurch gekennzeichnet, dass** eine Fliehkraftpendeleinrichtung (14) an einem Kupplungsbestandteil (5a) der Trennkupplung (3) befestigt ist.

7. Kupplungseinrichtung (1) nach Anspruch 6, **dadurch gekennzeichnet, dass** die Fliehkraftpendeleinrichtung (14) an einer radialen Außenseite (15) eines topfförmigen Trägers (16) des ersten Kupplungsbestandteils (5a) angebracht ist.

8. Kupplungseinrichtung (1) nach Anspruch 6 oder 7, **dadurch gekennzeichnet, dass** die Fliehkraftpendeleinrichtung (14) zumindest teilweise in einer axialen Richtung auf gleicher Höhe mit mehreren miteinander verbindbaren Reibelementen (17a, 17b) der Trennkupplung (3) angeordnet ist.

9. Kupplungseinrichtung (1) nach einem der Ansprüche 1 bis 8, **dadurch gekennzeichnet, dass** die Fliehkraftpendeleinrichtung (14) axial neben mehreren Dämpferfedern (18) des Drehschwingungsdämpfers (2) angeordnet ist und/oder die Befestigungseinheit (4) seitens ihres Spannelementes (9) radial innerhalb der Fliehkraftpendeleinrichtung (14) und der Dämpferfedern (18) angeordnet ist.

## Claims

1. The invention relates to a clutch device (1) for a drive train of a motor vehicle, comprising a torsional vibration damper (2), a disconnect clutch (3) and a fastening unit (4) which detachably connects the disconnect clutch (3) to the torsional vibration damper (2), wherein the fastening unit (4) has a first toothing region (6) fixed to a clutch component (5a) of the disconnect clutch (3), a second toothing region (8) which is fixed to the output side (7) of the torsional vibration damper (2) and which is in an interlocking rotational connection with the first toothing region (6), and a clamping element (9) which preloads the toothing regions (6, 8) relative to one another with a preloading force in a circumferential direction, and wherein the clamping element (9) is designed such that it preloads the output side (7) of the torsional vibration damper (2) with an axial contact force relative to the clutch component (5a), **characterised in that** the disconnect clutch (3) has a first clutch component (5a) receiving the first toothing region (6) and a second clutch component (5b) which can be coupled to the first clutch component (5a).

2. The clutch device (1) according to claim 1, **characterised in that** the torsional vibration damper (2) is designed as a dual-mass flywheel, wherein the output side (7) is realised directly by a driver disc (10) which can be rotated in a torsional-vibration-damped manner relative to a primary wheel (11) of the torsional vibration damper (2).

3. The clutch device (1) according to claim 1 or 2, **characterised in that** the second clutch component (5b) is connected in a rotationally fixed manner to an intermediate shaft (12) and the first clutch component (5a) is rotatably mounted on said intermediate shaft (12).

4. The clutch device (1) according to any one of claims 1 to 3, **characterised in that** the two clutch components (5a, 5b) are accommodated on the intermediate shaft (12) in such a way that an actuating force applied by an actuating unit (13) for engaging or disengaging the disconnect clutch (3) is supported via the intermediate shaft (12).

5. The clutch device (1) according to any one of claims 1 to 4, **characterised in that** the disconnect clutch (3) is designed as a single-disc clutch or as a multi-disc clutch.

6. The clutch device (1) according to any one of claims 1 to 5, **characterised in that** a centrifugal pendulum device (14) is fastened to a clutch component (5a) of the disconnect clutch (3).

7. The clutch device (1) according to claim 6, **characterised in that** the centrifugal pendulum device (14) is attached to a radial outer side (15) of a pot-shaped carrier (16) of the first clutch component (5a).

8. The clutch device (1) according to claim 6 or 7, **characterised in that** the centrifugal pendulum device (14) is arranged at least partially in an axial direction at the same height as a plurality of friction elements (17a, 17b) of the disconnect clutch (3) which can be connected to one another.

9. The clutch device (1) according to any one of claims 1 to 8, **characterised in that** the centrifugal pendulum device (14) is arranged axially next to a plurality of damper springs (18) of the torsional vibration damper (2) and/or the fastening unit (4) is arranged on the clamping element (9) side thereof radially inside the centrifugal pendulum device (14) and the damper springs (18).

## Revendications

1. Dispositif d'accouplement (1) pour une chaîne cinématique d'un véhicule automobile, comportant un amortisseur de vibrations de torsion (2), un accouplement de séparation (3) ainsi qu'une unité de fixation (4) reliant de manière amovible l'accouplement de séparation (3) à l'amortisseur de vibrations de torsion (2), dans lequel l'unité de fixation (4) présente une première zone de denture (6) fixée sur un élément constitutif d'accouplement (5a) de l'accouplement de séparation (3), une seconde zone de denture (8) fixée sur le côté sortie (7) de l'amortisseur de vibrations de torsion (2) se trouvant en liaison par rotation par complémentarité de forme avec la première zone de denture (6) ainsi qu'un élément de serrage (9) qui précontraint les zones de denture (6, 8) l'une par rapport à l'autre au moyen d'une force de précontrainte dans une direction circonférentielle et dans lequel l'élément de serrage (9) est conçu de telle sorte qu'il précontraint le côté de sortie (7) de l'amortisseur de vibrations de torsion (2) à l'aide d'une force de pression axiale par rapport à l'élément constitutif d'accouplement (5a), **caractérisé en ce que** l'accouplement de séparation (3) présente un premier élément constitutif d'accouplement (5a) logeant la première zone de denture (6) ainsi qu'un second élément constitutif d'accouplement (5b) pouvant s'accoupler avec le premier élément constitutif d'accouplement (5a).

2. Dispositif d'accouplement (1) selon la revendication 1, **caractérisé en ce que** l'amortisseur de vibrations de torsion (2) est conçu sous la forme d'un volant moteur bimasse, dans lequel le côté de sortie (7) est déplacé directement par une cloche d'embrayage (10) capable de tourner par amorti de vibrations de torsion par rapport à une roue primaire (11) de l'amortisseur de vibrations de torsion (2).

3. Dispositif d'accouplement (1) selon la revendication 1 ou 2, **caractérisé en ce que** le second élément constitutif d'accouplement (5b) est relié solidaire en rotation avec un arbre intermédiaire (12) et le premier élément constitutif d'accouplement (5a) est monté de manière à pouvoir tourner sur cet arbre intermédiaire (12).

4. Dispositif d'accouplement (1) selon l'une quelconque des revendications 1 à 3, **caractérisé en ce que** les deux éléments constitutifs d'accouplement (5a, 5b) sont logés sur l'arbre intermédiaire (12) de telle manière qu'une force d'actionnement appliquée par une unité d'actionnement (13) pour fermer ou ouvrir l'accouplement de séparation (3) est soutenue par le biais de l'arbre intermédiaire (12).

5. Dispositif d'accouplement (1) selon l'une quelconque des revendications 1 à 4, **caractérisé en ce que** l'accouplement de séparation (3) est conçu sous la forme d'un accouplement à un disque ou à disques multiples.

6. Dispositif d'accouplement (1) selon l'une quelconque des revendications 1 à 5, **caractérisé en ce qu'**un dispositif pendule centrifuge (14) est fixé à un élément constitutif d'accouplement (5a) de l'accouplement de séparation (3).

7. Dispositif d'accouplement (1) selon la revendication 6, **caractérisé en ce que** le dispositif pendule centrifuge (14) est monté sur un côté extérieur radial (15) d'un support (16) en forme de cuvette du premier élément constitutif d'accouplement (5a).

8. Dispositif d'accouplement (1) selon la revendication 6 ou 7, **caractérisé en ce que** le dispositif pendule centrifuge (14) est disposé au moins à certains endroits dans une direction axiale à la même hauteur avec plusieurs éléments de friction (17a, 17b) de l'accouplement de séparation (3) pouvant être reliés entre eux.

9. Dispositif d'accouplement (1) selon l'une quelconque des revendications 1 à 8, **caractérisé en ce que** le dispositif pendule centrifuge (14) est disposé axialement à côté de plusieurs ressorts d'amortisseur (18) de l'amortisseur de vibrations de torsion (2) et/ou l'unité de fixation (4) est disposé du côté de son élément de serrage (9) radialement à l'intérieur du dispositif pendule centrifuge (14) et des ressorts d'amortisseur (18).
